# EUROPEAN PATENT SPECIFICATION

(11) **EP 1 217 055 B1**
(45) Date of publication and mention of the grant of the patent: **05.04.2006**
(21) Application number: 01129372.7
(22) Date of filing: 18.12.2001
(51) Int. Cl.: C09J 7/02

(54) **Electronic device comprising a double coated pressure sensitive adhesive sheet having an excellent shock resistance**
Eine beidseitige druckempfindliche Klebefolie mit ausgezeichneter Schockbeständigkeit aufweisendes elektonisches Gerät
Dispositif électronique comprenant une feuille adhésive double face ayant une excellente résistance aux chocs

(30) Priority: 21.12.2000 JP 2000388602
(43) Date of publication of application: 26.06.2002
(73) Proprietor: DAINIPPON INK AND CHEMICALS, INC., Itabashi-ku Tokyo (JP)
(72) Inventor: Tanabe, Kosuke, Saitama-shi, Saitama-ken (JP); Takano, Hiroki, Toda-shi, Saitama-ken (JP); Yamada, Akihiro, Saitama-shi, Saitama-ken (JP)
(74) Representative: Albrecht, Thomas

(56) References cited:
- DATABASE WPI Section Ch, Week 199136 Derwent Publications Ltd., London, GB; Class G03, AN 1991-262348 XP002219194 & JP 03 170573 A (FUJI PHOTO FILM CO LTD), 24 July 1991 (1991-07-24)

## Description

### BACKGROUND OF THE INVENTION

### 1. Field of the Invention

The present invention relates to the use of a double coated pressure sensitive adhesive sheet. More specifically, the present invention relates to the use of a shock resistant double coated pressure sensitive adhesive sheet, having an excellent shock resistance, for adhering electronic parts.

### 2. Background Art

Double coated pressure sensitive adhesive sheets have been used for fixing various parts in many industrial fields due to their excellent workability and operation efficiency. In comparison with normal adhesives, the double coated pressure sensitive adhesive sheets are particularly advantageous when used for cases where the shapes of parts to be fixed are complicated or where high productivity is required for automated lines. For these reasons, double coated pressure sensitive adhesive sheets are used for such purposes as affixing a name plate for an electronic part or protecting a panel for an information display.

Electronic devices, for instance of cellular phones, are required to have some degree of shock resistance not to be broken when, for example, they slip from a hand or fall from a desk. If the shock resistance of a double coated pressure sensitive adhesive sheet is not sufficient, parts which are adhered by using the adhesive sheet may be detached from the sheet when a shock is given to the parts by, for example, hitting the ground due to the fall. The reason for detachment is believed to be insufficiency in the shock resistance of an adhering surface of the adhesive sheet which cannot tolerate the shock generated by the fall. In particular, if a double coated pressure sensitive adhesive sheet is used for adhering a part to a portion on which an antifouling Ultraviolet (UV) cured coating layer is applied, it is difficult to obtain a sufficient adhesive strength since the UV cured coating layer contains components such as a silicone oil.

### SUMMARY OF THE INVENTION

Accordingly, an object of the present invention is to provide a double coated pressure sensitive adhesive sheet having an excellent shock resistance by which parts which are adhered are unlikely to detach due to shock generated by, for instance, a fall.

The inventors of the present invention have attained the above object by finding that a double coated pressure sensitive adhesive sheet having an adhesive layer that has a maximum of loss tangent in the frequency region equal to or larger than the maximum characteristic frequency generated by some types of shocks, such as that generated when an electronic device falls to the ground, and the maximum of the loss tangent of equal to or greater than 1, has a high shock resistance.

That is, at least one of the adhesive layers of a double coated pressure sensitive adhesive sheet used according to the present invention has a maximum of loss tangent in the frequency region equal to or larger than the maximum characteristic frequency generated by some types of shocks, such as that generated when an electronic device falls to the ground, and the maximum of the loss tangent of equal to or greater than 1. In this manner, the adhesive layer of the double coated pressure sensitive adhesive sheet used according to the present invention, can efficiently absorb the vibrational energy generated when the electronic device falls, and a high adhesion and bonding property, which cannot be attained by a conventional double coated adhesive sheet, is obtained even if a part is adhered to a UV cured coating surface containing silicone oil.

In general, when an object, in which a part thereof is fixed by a double coated pressure sensitive adhesive sheet, is dropped, the object vibrates at a frequency region characteristic to the shape of the object due to the shock generated by the fall. This frequency region is called the characteristic frequency region, and the energy in the characteristic frequency region (also called vibrational energy) is transmitted to the part adhered to the object via the double coated pressure sensitive adhesive sheet. Accordingly, the higher the performance of the adhesive sheet to absorb the vibrational energy, the smaller the vibrational energy transmitted to the part and the lower the probability that the part will detach from the adhesive sheet.

The energy absorbing performance means the ratio of conversion of mechanical energy to thermal energy, and an adhesive layer (a visco-elastic state) having both viscous and elastic properties possesses a higher energy absorbing performance as its ratio of viscosity increases.

When the elasticity (a storage modulus of elasticity) and the viscosity (a loss modulus of elasticity) of an adhesive layer, i.e., an visco-elastic state, are measured based on the frequency, both the elasticity and the viscosity increase as the frequency increases. This means that the elastic property of the adhesive layer is higher when the frequency increases.

On the other hand, the loss tangent, which is a value obtained by dividing the viscosity by the elasticity, increases as the frequency increases, and then decreases after it reaches a maximum at a certain frequency. Accordingly, the adhesive layer exhibits properties as a visco-elastic state (i.e., a pressure sensitive adhesive), in which the viscous property and the elastic property coexist, in the lower frequency region, until the loss tangent reaches its maximum, and exhibits properties as a glassy state in the frequency region higher than the maximum. Thus, the adhesive layer cannot absorb the vibrational energy in the frequency region higher than the frequency at which the loss tangent reaches the maximum. Also, if the maximum exceeds a value of 1, the viscous property exceeds the elastic property and the energy absorbing performance increases.

Therefore, when the maximum of the loss tangent of the adhesive layer of the double coated pressure sensitive adhesive sheet is in the characteristic frequency region generated by a shock caused by a fall of an object, the vibrational energy in the frequency region larger than the maximum of the loss tangent cannot be absorbed by the adhesive layer and can be transmitted to an adhered part. Therefore, detachment of the adhered part tends to easily occur.

Accordingly, the present invention provides the use of a double coated pressure sensitive adhesive sheet used for affixing a part of an electronic device, including an adhesive layer, which is provided on at least one surface of the double coated pressure sensitive adhesive sheet, having a maximum of loss tangent in a frequency region equal to or larger than a maximum characteristic frequency generated by a shock when the electronic device falls, the maximum of the loss tangent being equal to or greater than 1.

Furthermore, the invention provides an electronic device in which a part thereof is fixed by such an adhesive sheet.

In another aspect of the invention, the maximum of the loss tangent of the adhesive layer at 25°C is in a frequency region equal to or greater than 10³ Hz.

In yet another aspect of the invention, the above electronic device is a cellular phone.

### DESCRIPTION OF THE PREFERRED EMBODIMENTS

The invention summarized above and defined by the enumerated claims may be better understood by referring to the following detailed description.

This detailed description of particular preferred embodiments, set out below to enable one to build and use particular implementations of the invention, is not intended to limit the enumerated claims, but to serve as particular examples of the invention.

According to an embodiment of the present invention, a base material may be optionally used for a double coated pressure sensitive adhesive sheet. The types of base material are not particularly limited, and any known base material may be utilized. Examples of such base material include, for instance, porous base materials, such as non-woven fabrics, cloth, and paper; and plastic films, such as polyester films, polyethylene films, polypropylene films, and plastic films. If a film type base material is used, a surface corona treatment or anchor coating treatment may be carried out on the medium in order to improve an anchoring property thereof with respect to an adhesive layer.

The thickness of the base material may be in the range between about 4 and 200 µm, which is conventional and common, and it is more preferable that the thickness of the base material may be in the range between about 10 and 100 µm.

The adhesive layer of the double coated pressure sensitive adhesive sheet used according to the present invention has a maximum of loss tangent in the frequency region equal to or larger than the maximum characteristic frequency generated by some type of shocks, such as that generated when an electronic part falls to the ground, and the maximum of the loss tangent is equal to or greater than 1. If the maximum of the loss tangent is in the frequency region less than the maximum characteristic frequency, parts tend to be detached due to the shock generated since the frequency energy is not efficiently absorbed. The same thing also applies to cases where the maximum of the loss tangent is less than 1. In addition, according to the double coated pressure sensitive adhesive sheet used according to the present invention, the frequency at which the loss tangent of the adhesive layer shows its maximum is preferably at least 10³ Hz, more preferably 10⁴ Hz or more, and most preferably 10⁵ Hz or more in order to obtain a sufficient adhesive strength with an excellent shock resistance for a UV cured coating surface containing silicone oil.

As for an adhesive composition forming an adhesive layer, it is possible to use known acrylic or rubber type adhesive compositions. For cases where an acrylic type adhesive composition is used, it is preferable to employ an acrylic copolymer containing, as a monomer component, acrylate including an alkyl side chain having 2-14 carbon atoms. It is more preferable to use an acrylic copolymer containing, as a monomer component, acrylate including an alkyl side chain having 8-14 carbon atoms and acrylate including an alkyl side chain having 8-14 carbon atoms. In addition, it is preferable to add about 0.01-3% by mass of acrylate or other vinyl monomers having a polar group, such as a hydroxyl group, a carboxyl group, and an amino group, to the side chains as a monomer component.

Also, a cross-linking agent may be added to the adhesive composition in order to enhance the cohesive strength of the adhesive layer. Examples of the cross-linking agents include an isocyanate type cross-linking agent, an epoxy type cross-linking agent, and a chelate type cross-linking agent.

According to an embodiment of the present invention, it is preferable that the gel fraction, which is an index for showing the degree of cross-linking, may be in a range between about 25 and 65%.

The gel fraction is a value expressed as a percentage which may be calculated by dividing the mass of a residual gel, which is obtained by immersing an adhesive layer in toluene for 24 hours, by the mass of the adhesive layer prior to the immersion.

Examples of the rubber type adhesive composition include, for instance, a block copolymer, such as styrene-isobutylene-styrene block copolymer, a synthetic rubber type adhesive composition, and a natural rubber.

Also, when a silicone type adhesive composition is used, the adhesive strength of the adhesive sheet is enhanced since the composition has a high affinity with silicone oil present in a UV cured layer. A peroxide cross-linking type: or an addition-condensation type of the silicone type adhesive composition may be used, singularly or in a mixture. Moreover, it is possible to mix the silicone type adhesive composition with an acrylic type or a rubber type adhesive composition. Further, an adhesive composition, in which a silicone component is attached to a main chain or side chains of polymers of an acrylic type adhesive, may also be utilized according to an embodiment of the present invention.

In addition, it is possible to add various additives, such as a tackifier, an antioxidant, an ultraviolet absorbent, a filler, a pigment, a thickener, etc., to the adhesive layer of the double coated pressure sensitive adhesive sheet as long as they do not interfere with the performance of the adhesive layer.

A coating liquid for the adhesive layer used for an embodiment of the present invention may be prepared by dissolving the above adhesive composition and other additives, if necessary, in an organic solvent. The organic solvent which may be used for such purposes is not particularly limited as long as the above compositions and additives can be dissolved in the solvent. Conventional organic solvents, such as ethyl acetate, toluene, xylene, methanol, isopropyl alcohol, may be used alone or in a mixture according to the present invention.

In order to form an adhesive layer on a base material, a method by which an adhesive composition solution is directly applied onto a base material using a roll coating machine or a die coating machine, or a method by which an adhesive layer is once formed on a separator and is then transferred onto a base material may be used. The thickness of the adhesive layer after being dried is preferably between about 30 and 300 µm, and more preferably between about 50 and 200 µm.

The loss tangent of the adhesive layer of the double coated pressure sensitive adhesive sheet used according to the present invention may be measured by a frequency dispersion method using a viscoelasticity testing device.

The characteristic frequency region of the electronic devices generated when a shock is applied to an electronic device, such as when the device hits the ground, may be measured as a characteristic frequency distribution by recording an output from an ultrasonic sensor, which is fixed to the electronic device to be tested, when the device is dropped from a height of about 5-10 cm, using a digital oscilloscope, and by Fourier transforming the output.

The double coated pressure sensitive adhesive sheet used according to the present invention may be suitably used for affixing parts to electronic devices, such as a portable telephone, a portable personal computer, and a portable information terminal, i.e., a personal digital assistance (PDA). For the cases where the double coated pressure sensitive adhesive sheet used according to the present invention is used for, for instance, edging of a display panel of an electronic device, such as a liquid crystal display panel of a portable telephone, or affixing them to a main body, it is preferable to make the overall light transmittance of the double coated adhesive sheet be 20% or smaller.

### Example:

In the following, the present invention will be explained using examples. Note that the terms "parts" and "%" used hereinafter mean "parts by mass" and "% by mass", respectively, unless otherwise indicated.

### Preparation of adhesive composition solution (1)

Butylacrylate (30 parts), 2-ethylhexyl acrylate (67.9 parts), acrylic acid (2 parts), β-hydroxyethylacrylate (0.1 part), and 2, 2'-azo-bisisobutyronitrile (0.2 part) as a polymerization initiator, were dissolved in ethyl acetate (100 parts) in a reaction vessel provided with an agitator, a reflux condenser, a thermometer, a dropping funnel, and a nitrogen gas introduction opening, and polymerized for 8 hours at 80°C to obtain a solution of acrylic copolymer having a mass average molecular weight of 700,000. After this, ethyl acetate was added to the solution to obtain an adhesive composition solution (1) having 40% nonvolatile components.

### Preparation of double coated adhesive sheet (1)

An isocyanate type cross-linking agent (1 part) ("Coronate L-45"; 45% solid content, a product of NIPPON POLYURETHANE INDUSTRY CO. LTD) was added to 100 parts of the above adhesive composition solution (1) and the mixture was stirred for 15 minutes. After this, the mixture was applied onto a polyester film having a thickness of 75 µm, whose surface was coated with a release agent, so that the thickness of the mixture became 70 µm after being dried, and the mixture was dried for three minutes at 80°C. An adhesive sheet obtained was transferred onto both sides of a non-woven fabric having a grammage of 14 g/m² and a thickness of 50 µm ("Mikiron 805", a product of MIKI TOKUSYU PAPER Mfg. CO. LTD.) and was laminated on the fabric at a pressure of 40 N/cm² using a roller. After this, the adhesive sheet was aged for two days at 40°C to obtain a double coated adhesive sheet (1),

### Comparative Example:

### Preparation of adhesive composition solution (2)

Butylacrylate (94.9 parts), acrylic acid (5 parts), β-hydroxyethylacrylate (0.1 part), and 2, 2'-azo-bisisobutyronitrile (0.2 part) as a polymerization initiator, were dissolved in ethyl acetate (100 parts) in a reaction vessel provided with an agitator, a reflux condenser, a thermometer, a dropping funnel, and a nitrogen gas introduction opening, and polymerized for 8 hours at 80°C to obtain a solution of acrylic copolymer having a mass average molecular weight of 700,000. After this, ethyl acetate was added to the solution to obtain an adhesive composition solution (2) having 40% nonvolatile components. Preparation of double coated adhesive sheet (2)

A tackifier (12 parts) ("Super-ester A100", a product of ARAKAWA CHEMICAL INDUSTRIES. LTD.) and an isocyanate type cross-linking agent (1 part) ("Coronate L-45"; 45% solid content, a product of NIPPON POLYURETHANE INDUSTRY CO. LTD.) were added to 100 parts of the above adhesive composition solution (2) and the mixture was stirred for 15 minutes. After this, the mixture was applied onto a polyester film having a thickness of 75 µm, whose surface was coated with a release agent, so that the thickness of the mixture became 70 µm after being dried, and they were dried for three minutes at 80°C. An adhesive sheet obtained was transferred onto both sides of a non-woven fabric having a grammage of 14 g/m² and a thickness of 50 µm ("Mikiron 805", a product of MIKI TOKUSYU PAPER Mfg. CO. LTD.) and was laminated on the fabric at a pressure of 40 N/cm² using a roll. After this, the adhesive sheet was aged for two days at 40°C to obtain a double coated adhesive sheet (2).

The above adhesive composition solutions and the double coated adhesive sheets prepared in Example and Comparative Example were examined using methods explained below and the results are shown in Table 1. A portable telephone ("P205", a product of Matsushita Communication Industrial Co., Ltd.) was used as an electronic device to be tested.

### (1) Measuring device:

The characteristic frequency region generated when the portable telephone was dropped, is a value measured as a characteristic frequency distribution by recording an output from an ultrasonic sensor, which was fixed to the portable telephone to be tested, when the telephone was dropped from a height of about 5-10 cm, using a digital oscilloscope, and by Fourier transforming the output. The ultrasonic sensor used was "AE-900S-WB" (a product of NF-Circuit Design Block Co., Ltd.) (whose measurable range of frequency is 2 × 10⁴ - 5 × 10⁵ Hz), and the digital oscilloscope used was "DS-8623" (a product of Iwatsu Electric Co., Ltd.).

### (2) Measurement of loss tangent of an adhesive layer:

The double coated adhesive sheets of Example and Comparative Example, respectively, were superimposed to have a thickness of 5 mm, and they were aged for two days at 40°C to be used as test pieces. Parallel plates having diameters of 7.9 mm were attached to a viscoelasticity testing device "Ares 2kSTD" (a product of Rheometrix Co., Ltd.) to sandwich the test piece, and the loss tangent thereof was measured at 25°C in the frequency range of between 10⁻² Hz and 80 Hz. Then, using the same condition, except for the temperature, measurements were carried out at 10°C, 0°C, -10°C, and -20°C. Results obtained were subjected to a temperature-velocity conversion using a software attached to the "Ares 2kSTD", and a master curve of loss tangent in the range of 10⁻² Hz and 10⁶ Hz was obtained. The frequency of the maximum of the loss tangent was obtained from the master curve.

### (3) Drop and shock test

To a liquid crystal display unit of a portable telephone "P205" (a product of Matsushita Communication Industrial Co., Ltd.), an acrylic protective plate, which is a genuine part of the same company, was attached and fixed by using the double coated adhesive sheets of Example and Comparative Example at 23°C. After being left for one hour at 23°C, the portable telephone was dropped from a height of 1.5 m on a concrete floor, and the number of the drops required for the acrylic protective plate to be detached from the portable telephone was counted.

### (4) Adhesive strength

One surface of the double coated adhesive sheet having a width of 20 mm was backed by a 25 µm polyester film, and the adhesive sheet was attached to an ABS plate, with a UV cured coating, at a temperature of 23°C. Then, pressure was applied to the adhesive sheet by reciprocating a 2 kg roller once on the sheet. The double coated adhesive sheet was left for one hour at -30°C, and was then pulled in a 180° direction at a rate of 300 mm/min to measure the adhesive strength (N/20 mm) thereof.

**Table 1**

| | Max. characteristic frequency of Portable tel. (Hz) | Loss tangent of adhesive layer | | Drop and shock test (Number) | Adhesive strength at -30°C (N / 20 mm) |
|---|---|---|---|---|---|
| | | Max. freq. | Max. | | |
| Example | 1.4 × 10⁵ | 2 × 10⁵ | 1.4 | 60< | 10 |
| C. Example | 1.4 × 10⁵ | 1 × 10⁴ | 1.5 | 6 | 0 |

As is clear from Table 1, when the electronic device was dropped, in which parts thereof were adhered by using a double coated adhesive sheet according to an embodiment of the present invention, the parts were hardly detached from the sheet because the double coated adhesive sheet included an adhesive layer having a maximum of loss tangent in the frequency region equal to or larger than the maximum characteristic frequency generated when the electronic device hit the ground, and the maximum of the loss tangent is equal to or greater than 1 so that the frequency energy is efficiently absorbed by the adhesive sheet. In addition, the adhesive strength at -30°C of the double coated adhesive sheet according to the present invention was also high.

It is noted that the effect of the double coated adhesive sheet used according to the present invention becomes conspicuous especially when a part is attached to a surface of a UV cured coating layer including a silicone oil component.

Having thus described several exemplary embodiments of the invention, it will be apparent that various alterations, modifications, and improvements will readily occur to those skilled in the art. Such alterations, modifications, and improvements, though not expressly described above, are nonetheless intended and implied to be within the scope of the invention. Accordingly, the invention is limited and defined only by the following claims and equivalents thereto.

## Claims

1. Use of a double coated pressure sensitive adhesive sheet for fixing a part of an electronic device, wherein the adhesive sheet comprises:
an adhesive layer, which is provided on at least one surface of said double coated pressure sensitive adhesive sheet, having a maximum of loss tangent in a frequency region equal to or larger than a maximum characteristic frequency generated by a shock when said electronic device falls, the maximum of the loss tangent being equal to or greater than 1.

2. Use of a double coated pressure sensitive adhesive sheet according to claim 1,
wherein the maximum of the loss tangent of said adhesive layer at 25°C is in a frequency region equal to or greater than 10³ Hz.

3. Use of a double coated pressure sensitive adhesive sheet according to claim 1 or 2, wherein said electronic device is a portable telephone.

4. An electronic device in which a part thereof is fixed by a double coated pressure sensitive adhesive sheet, wherein
an adhesive layer, which is provided on at least one surface of said double coated pressure sensitive adhesive sheet, has a maximum of loss tangent in a frequency region equal to or larger than a maximum characteristic frequency generated by a shock when said electronic device falls, and the maximum of the loss tangent is equal to or greater than 1.

5. An electronic device according to claim 4, wherein
the maximum of the loss tangent of said adhesive layer at 25°C is in a frequency region equal to or greater than 10³ Hz.

6. An electronic device according to claim 4 or 5, wherein said electronic device is a portable telephone.

## Revendications

1. Utilisation d'une feuille adhésive double face sensible à la pression pour fixer une partie d'un dispositif électronique, dans laquelle la feuille adhésive comprend :
une couche adhésive, laquelle est prévue sur au moins une surface de ladite feuille adhésive double face sensible à la pression, présentant un maximum de facteur de dissipation dans une région de fréquences égale ou supérieure à une fréquence caractéristique maximale générée par un choc lorsque ledit dispositif électronique tombe, le maximum du facteur de dissipation étant égal ou supérieur à 1.

2. Utilisation d'une feuille adhésive double face sensible à la pression selon la revendication 1,
dans laquelle le maximum de facteur de dissipation de ladite couche adhésive à 25°C est dans une région de fréquences égale ou supérieure à 10³ Hz.

3. Utilisation d'une feuille adhésive double face sensible à la pression selon la revendication 1 ou 2,
dans laquelle ledit dispositif électronique est un téléphone portable.

4. Dispositif électronique dans lequel une partie de celui-ci est fixée par une feuille adhésive double face sensible à la pression, dans lequel
une couche adhésive, laquelle est prévue sur au moins une surface de ladite feuille adhésive double face sensible à la pression, présente un maximum de facteur de dissipation dans une région de fréquences égale ou supérieure à une fréquence caractéristique maximale générée par un choc lorsque ledit dispositif électronique tombe, et le maximum de facteur de dissipation est égal ou supérieur à 1.

5. Dispositif électronique selon la revendication 4, dans lequel
le maximum de facteur de dissipation de ladite couche adhésive à 25°C est dans une région de fréquences égale ou supérieure à 10³ Hz.

6. Dispositif électronique selon la revendication 4 ou 5, dans lequel ledit dispositif électronique est un téléphone portable.

## Patentansprüche

1. Verwendung einer beidseitig beschichteten druckempfindlichen Klebstofffolie zur Fixierung eines Teils eines elektronischen Geräts, wobei die Klebstofffolie Folgendes umfasst:
eine Klebstoffschicht, die auf mindestens einer Oberfläche der genannten beidseitig beschichteten druckempfindlichen Klebstofffolie vorgesehen ist, mit einem Maximum des Verlusttangens in einem Frequenzbereich, der einer maximalen charakteristischen Frequenz gleich ist oder größer ist, die durch einen Schock erzeugt wird, wenn das genannte elektronische Gerät herunterfällt, wobei das Maximum des Verlusttangens gleich oder größer als 1 ist.

2. Verwendung einer beidseitig beschichteten druckempfindlichen Klebstofffolie nach Anspruch 1, wobei
das Maximum des Verlusttangens der genannten Klebstoffschicht bei 25°C in dem Frequenzbereich liegt, der gleich 10³ Hz oder größer ist.

3. Verwendung einer beidseitig beschichteten druckempfindlichen Klebstofffolie nach Anspruch 1 oder 2, wobei das genannte elektronische Gerät ein tragbares bzw. schnurloses Telefon ist.

4. Elektronisches Gerät, bei dem ein Teil davon mittels einer beidseitig beschichteten druckempfindlichen Klebstofffolie fixiert ist, wobei
eine Klebstoffschicht, die auf mindestens einer Oberfläche der genannten beidseitig beschichteten druckempfindlichen Klebstofffolie vorgesehen ist, ein Maximum des Verlusttangens in einem Frequenzbereich, der einer maximalen charakteristischen Frequenz gleich ist oder größer ist, die durch einen Schock erzeugt wird, wenn das genannte elektronische Gerät herunterfällt, hat und ein Maximum des Verlusttangens gleich oder größer als 1 ist.

5. Elektronisches Gerät nach Anspruch 4, wobei das Maximum des Verlusttangens der genannten Klebstoffschicht bei 25°C in dem Frequenzbereich liegt, der gleich 10³ Hz oder größer ist.

6. Elektronisches Gerät nach Anspruch 4 oder 5, wobei das genannte elektronische Gerät ein tragbares bzw. schnurloses Telefon ist.
